# EUROPEAN PATENT SPECIFICATION

(11) **EP 4 038 077 B1**
(45) Date of publication and mention of the grant of the patent: **31.05.2023**
(21) Application number: 20792849.0
(22) Date of filing: 30.09.2020
(51) Int. Cl.: C07F 7/12, B01J 19/18, F23C 10/00, B01J 8/06, B01J 8/34, B01J 19/24, B01J 8/08

(54) **THERMAL CONDENSATION REACTOR**
THERMISCHER KONDENSATIONSREAKTOR
RÉACTEUR DE CONDENSATION THERMIQUE

(30) Priority: 01.10.2019 US 201962908802 P
(43) Date of publication of application: 10.08.2022
(73) Proprietor: Dow Silicones Corporation, Midland, MI 48686-0994 (US); Dow Global Technologies, LLC, Midland, MI 48674 (US)
(72) Inventor: MOLNAR, Michael, Midland, MI 48686 (US); PUNGANUR, Mohan, V., Freeport, TX 77541 (US)
(74) Representative: Murgitroyd & Company
(86) International application number: PCT/US2020/053447
(87) International publication number: WO 2021/067379

(56) References cited:
- US-A- 4 197 907
- US-A- 5 808 128
- US-B1- 6 962 676

## Description

### BACKGROUND

Certain chemical reactions, for example, thermal condensation or dehydrochlorination, may require high temperatures and involve corrosive reactants. One such reaction is the gas phase reaction of trichlorosilane (HSiCl₃) with vinyl chloride (H₂C=CHCl), which does not progress quickly until the temperatures exceed 500°C. This reaction liberates hydrogen chloride, HCl(g), which is corrosive to most metallurgies (e.g., even those containing high levels of Ni, Cr, and Mo for resistance). Moreover, at these temperatures, trichlorosilane reacts with nickel-containing metals to form intermetallic silicide compounds, which in turn can be etched by HCl, leading to an increased corrosion/pitting rate. Undesirable side reactions may occur, for example, the decomposition of vinyl chloride to soot when in excess of trichlorosilane. Soot can lead to operation and maintenance problems. Similarly, if trichlorosilane is fed in stoichiometric excess, the formation of 1,2-bis(trichlorosilyl)ethane and other heavy silicon-based compounds becomes prominent, resulting in waste chlorosilanes. US6962676 B1 discloses a method and apparatus in a fluidized bed heat exchanger. US4197907 A discloses a floating head support system for shell and tube heat exchanger.

Accordingly, what is needed are thermal condensation reactors that avoid these problems and processes of using the same.

### SUMMARY

Described herein are thermal condensation reactors (and processes of using the same). A presently described thermal condensation reactor comprises a heat transfer chamber, wherein the heat transfer chamber is a fluidized bed having a fluidization gas flow in a first direction, and wherein the heat transfer chamber has a plurality of heating zones that may be maintained at different temperatures, and a plurality of reaction tubes disposed in the heat transfer chamber in a second direction perpendicular to the fluidization gas flow, each reaction tube having a reactant gas flow that passes through the plurality of heating zones. Also described are processes for producing vinyltrichlorosilane and other alkenyl-functional halosilanes, comprising premixing vinyl chloride and a hydrido-functional halosilane to create a reactant gas, introducing the reactant gas into a plurality of reaction tubes arranged horizontally with respect to the base in a fluidized bed, and passing the reactant gas through a plurality of heating zones in the fluidized bed, wherein the plurality of heating zones are maintained at different temperatures.

### BRIEF DESCRIPTION OF THE DRAWINGS

FIG. 1 is a side perspective view of an example thermal condensation reactor.
FIG. 2 is a sectional view of the example thermal condensation reactor of FIG. 1.
FIG. 3 is an enlarged sectional view of an example reaction tube.
FIG. 4 is a side perspective view of an example resistance coil heating element.
FIG. 5 is an enlarged plan view of an example roller support.
FIG. 6 is a yield plot as a function of conversion for an example process involving a reaction tube.

### DETAILED DESCRIPTION

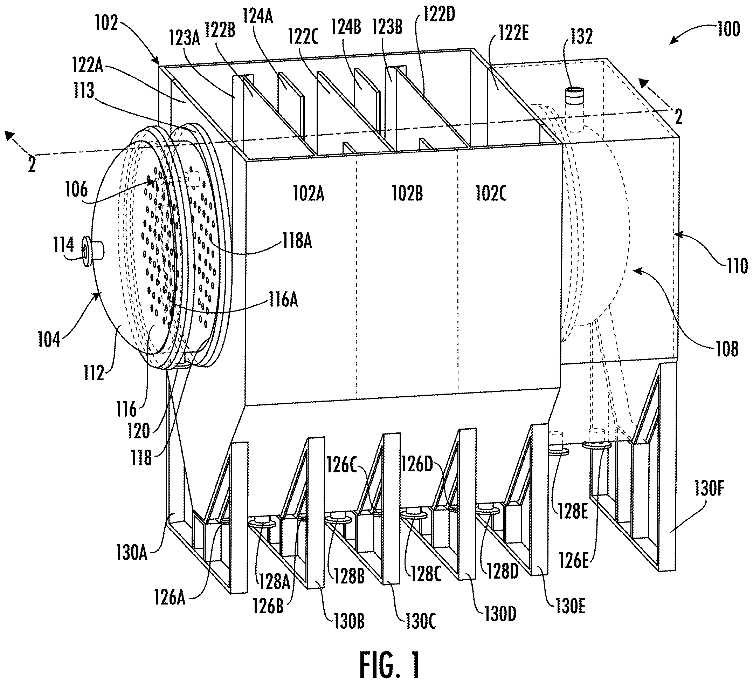

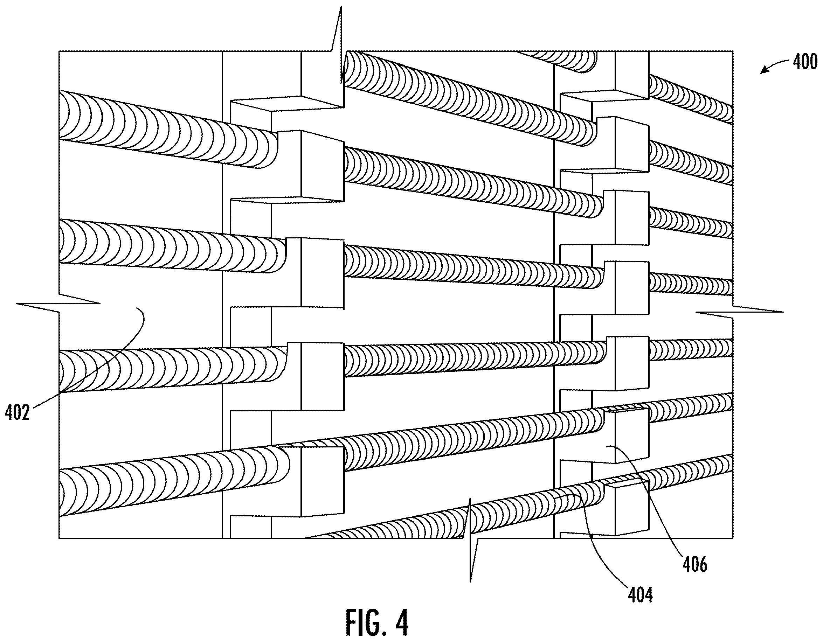

FIG. 1 is a side perspective view of a thermal condensation reactor 100 with a top portion removed. The reactor 100 includes a heat transfer chamber 102. As will be described, the heat transfer chamber 102 is preferably a fluidized bed chamber. The heat transfer chamber 102 includes a plurality of heating zones 102a-c. The heating zones are capable of being maintained at different temperatures. For example, each heating zone has its own temperature control. In one embodiment, the capability of the heating zones may be exploited to put relatively more energy into the initial stages of an exothermic reaction, and relatively less energy into subsequent stages of the reaction, or even, for example, to cool a reaction as it becomes increasingly exothermic. Accordingly, capability of being maintained at different temperatures is intended to be interpreted broadly; for example, it embraces maintaining an exothermic reaction at substantially the same temperature throughout the reaction cycle, which would necessarily involve holding different heating zones at different temperatures. Although three heating zones 102a-c are illustrated, it is understood that the heat transfer chamber 102 may include any number of heating zones, provided that the heat transfer chamber 102 has at least two heating zones. The heating zones may be produced by a heating source, such as an array of resistance coil heating elements (e.g., such as heating source 400 of FIG. 4) external to the heat transfer chamber, pulse combustion heater units internal to the heat transfer chamber, or the like. A heating zone may remove some heat from the fluidized solids through the use of either a heat pipe or an immersed heat exchanger cooled by a heat transfer fluid while at the same time maintaining capability to put heat into the process. The heating zones may (e.g., may also) be produced by a fluidization gas flow rate. Each of the heating zones 102a-c has its own logical controls to attain a desired temperature within the respective heating zones.

Refractory and other insulation materials may be used to reduce heat loss in the zones requiring heat input. The position of the materials may vary depending on the technology used. For example, refractory materials may be employed internal to the chamber if the heat input is driven by a pulse combustion unit, but it would be advantageous to use refractory outside of the heat transfer chamber if resistance heating elements are employed. Internal refractory materials have an additional benefit with respect to erosion, but erosion can also be managed using application of hard-faced metal overlay onto the chambers or the high velocity-oxygen fuel (HVOF)-applied ceramic coatings to the metal surface.

The thermal condensation reactor 100 includes a stationary inlet head 104. The stationary inlet head 104 is attached to the heat transfer chamber 102. Reactants enter the stationary head 104 (e.g., inlet side).

The thermal condensation reactor 100 includes a plurality of reaction tubes 106. Although a single reaction tube numbered 106 is depicted for simplicity of illustration, it is understood that a plurality of tubes is contemplated, and thus we refer to reaction tubes 106 throughout this disclosure. The plurality of reaction tubes 106 are in fluid communication with the stationary head 104 and extend through the heat transfer chamber 102. Accordingly, reactants enter the plurality of reaction tubes 106 at the stationary head 104, and are carried through the plurality of reaction tubes in the heat transfer chamber 102, experiencing the plurality of heating zones 102a-c. The reactants are sealed from the heat transfer chamber 102.

Differential thermal expansion between the tubes and the body of the heat transfer chamber and supports must be accommodated. The thermal condensation reactor 100 includes a floating head 108. The plurality of reaction tubes 106 exit the heat transfer chamber 102 into the floating head 108 (e.g., outlet side). The reaction product is thereby collected in the floating head 108. A cooling transition unit 110 surrounds the floating head 108. The cooling transition unit 110 may be used to control the temperature of the reaction products. In one embodiment, the function of the floating head could be replaced with a flexible tubesheet.

The stationary head 104 includes a bonnet 112 which is attached to heat transfer chamber 102. A gasket 113 is located between the bonnet 112 and the heat transfer chamber 102. The gasket 113 seals the connection between the bonnet 112 and the heat transfer chamber 102. In some embodiments, a primary function of the gasket 113 is to keep fluidized bed media out of the bonnet 112. Accordingly, a variety of gasket designs are contemplated, including, for example, a gasket, a double gasket, or a ring joint. Certain gasket details are dependent on thermal expansion mitigation strategy for the fluidized bed media.

The bonnet 112 cooperates with other components to define one or more plenums, as will be described herein. A primary gas feed inlet 114 is disposed in the bonnet 112. Reactants enter a plenum defined by the bonnet 112 via the primary gas feed inlet 114.

An inlet feed gas manifold 116 and a reactor tubesheet face 118 are disposed inside the bonnet 112. The reactor tubesheet face 118 abuts the heat transfer chamber 102. The inlet feed gas manifold 116 and the reactor tubesheet face 118 are disposed coplanar to each other and extend to the edges of the bonnet 112. The inlet feed gas manifold 116 and the reactor tubesheet face 118 each have a plurality of ports, respectively numbered as 116a and 118a, for receiving the plurality of reaction tubes 106. Each of the ports 116a and 118a will receive a respective reaction tube 106. Any number of reaction tubes 106 are contemplated, depending on space limitations, reactor capacity, and other considerations.

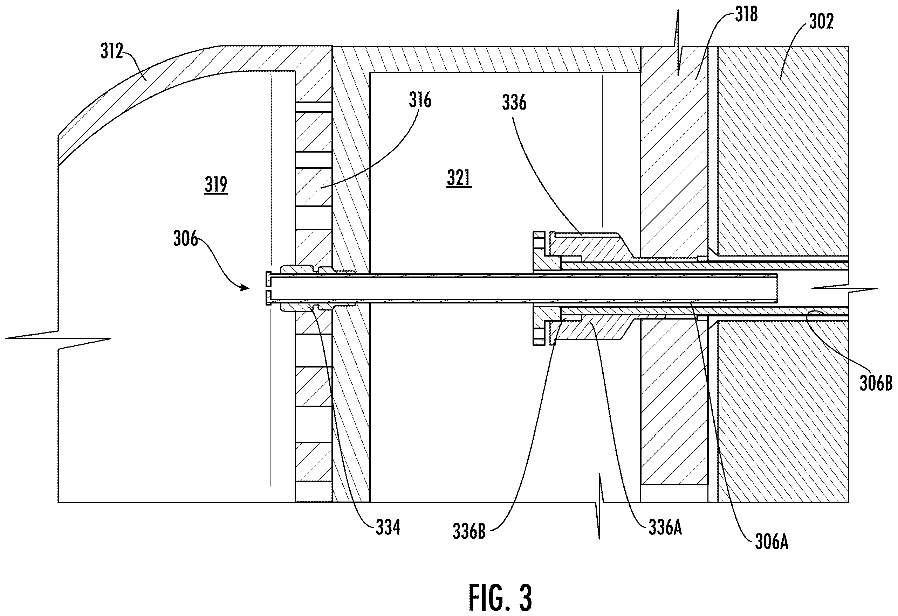

As will be described in more detail with respect to FIG. 3, the plurality of reaction tubes 106 are sealingly disposed in the ports 116a and 118a. Accordingly, when assembled, the components cooperate to define separate plenums that are not in fluid communication, for example, a first plenum between the bonnet 112 and a first side of the inlet feed gas manifold 116 (e.g., plenum 319 of FIG. 3), and a second plenum between a second side of the inlet feed gas manifold 116, the bonnet 112, and the reactor tubesheet face 118 (e.g., plenum 321 of FIG. 3).

Optionally, a shroud gas port 120 is in fluid combination with the second plenum defined between the inlet feed gas manifold 116, bonnet 112, and the reactor tubesheet face 118. The shroud gas port 120 introduces a nonreactive gas (e.g., shroud gas) to the second plenum (e.g., plenum 321 of FIG. 3). The shroud gas may act as a diluent and/or to manage pressure (e.g., in the plurality of reaction tubes 106). The reactor tubesheet face 118 is sealed from the heat transfer chamber 102, as will be described with respect to FIG. 3, such that the second plenum is not in fluid communication with the heat transfer chamber 102.

The thermal condensation reactor 100 includes a plurality of plates 122a-e. The plurality of plates 122a-e are disposed in the heat transfer chamber 102 to support the plurality of reaction tubes 106. For example, each of the plurality of plates 122a, 122b, 122c, 122d, 122e include a plurality of apertures. Each of the plurality of apertures is configured to receive a respective reaction tube of the plurality of reaction tubes 106. The plurality of reaction tubes 106 are supported by corresponding apertures in the plurality of plates 122a, 122b, 122c, 122d, 122e. As depicted, the bonnet 112 is attached to the plate 122a, which is adjacent to the reactor tubesheet face 118.

Although five plates 122a-e are illustrated, it is understood that any number of plates are contemplated. It is noted that the placement of the plates 122b-d does not necessarily correspond to the boundaries of heating zones 102a-c, rather, the boundaries of the heating zones are dictated by the position of the external heating source(s) (not depicted).

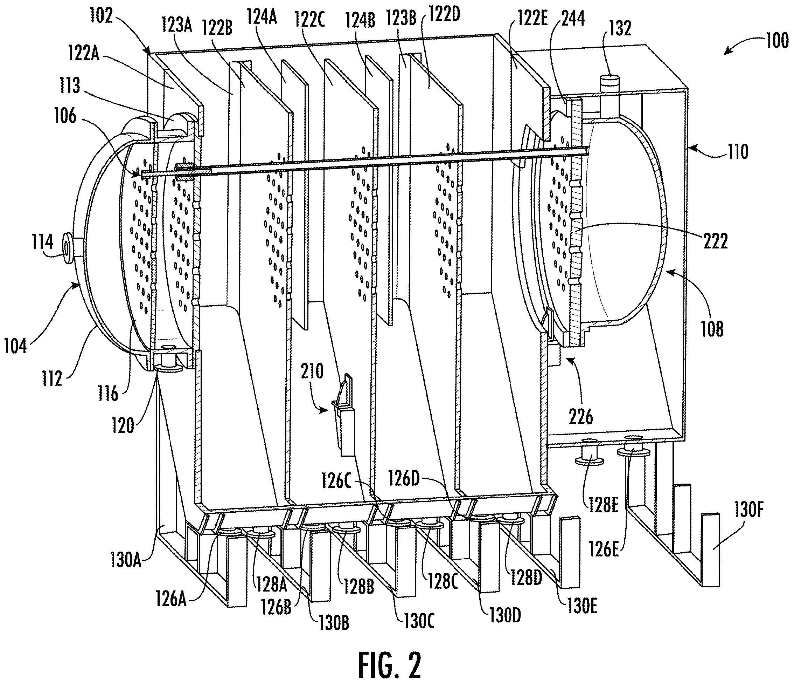

The plates 122a-e may be affixed to the heat transfer chamber 102 in a variety of manners, for example, by mechanical fasteners (e.g., plates 122a, 122b, 122d and 122e), or by moveable supports (e.g., plates 122c with respect to roller support 210 (as will be described with respect to FIG. 2)). In an example of mechanical fasteners, a plurality of tracks 123a-b secure the plates 122b and 122d within the heat transfer chamber 102. The tracks 123a-b may slidingly engage the plates 122b and 122d, for example, to allow for thermal expansion.

A plurality of baffles 124a-b are disposed in the heat transfer chamber 102. The plurality of baffles 124a-b support operation of the heat transfer chamber 102 as a fluidized bed. Additional baffles (not depicted) may be disposed in the heat transfer chamber 102. It is understood that the heat transfer chamber 102 may include any number of baffles similar to baffles 124a-b. It is understood that the plates 122b-d will also act as baffles in the operation as will be explained.

A plurality of gas ports 126a-d are disposed in fluid communication with the heat transfer chamber 102. The plurality of gas ports 126a, 126b, 126c, and 126d are configured to introduce a nonreactive gas to the heat transfer chamber 102. It is understood that any number of gas ports are contemplated, however, it is beneficial to have at least one gas port associated with each heating zone (*e.g.,* heating zones 102a-c), as will be explained. Although not depicted, a distributor plenum (such as, for example, a sparger, a sintered metal perforated plate gas distributor, or a porous plate) may be placed inside the heat transfer chamber 102 above the gas ports 126a-d.

Although not depicted, the heat transfer chamber 102 has a top portion for enclosing the heat transfer chamber 102. The top portion may have heating elements to control temperature. The top portion includes one or more collection plenums for collecting the nonreactive gas introduced via gas ports 126a-d. The one or more collection plenums may be in fluid communication with an exhaust (*e.g*., a common exhaust).

A plurality of drain ports 128a-d are disposed in fluid communication with the heat transfer chamber 102 for draining solids from the heat transfer chamber (*e.g*., although not depicted, the heat transfer chamber may contain solid particles, preferably a fluidized bed of solid particles (such as, for example, Geldart Group A powder forms). It is understood that any number of drain ports are contemplated.

A plurality of supports 130a-e are disposed under the heat transfer chamber 102 for structural support. It is understood that any number of supports are contemplated.

The cooling transition unit 110 has a gas port 126e, drain port 128e, and a support 130f, substantially similar in operation to those having the same reference numerals and described with respect to the heat transfer chamber 102. Although not depicted, the cooling transition unit 110 may contain solid particles, preferably a fluidized bed of solid particles (such as, for example, Geldart Group A powder forms). Fluidization of this zone reduces interferences in thermal expansion and reduces the amount of baffling required to maintain fluidization in the previous zone.

A vapor outlet 132 is disposed in the cooling transition unit 110, in fluid communication with the floating head 108. Reaction product (*e.g*., including optional shroud gases) from the plurality of reaction tubes 106 are collected through the vapor outlet 132.

FIG. 2 is a sectional view of FIG. 1 along a line 2-2. For simplicity of illustration, the reactor tubesheet face 118 and a portion of plate 122e have been removed.

A roller support 210 extends between the plate 122c and the heat transfer chamber 102 to attach the plate to the heat chamber while allowing, for example, thermal expansion of the plate.

The floating head 108 includes a plate 222 to support the plurality of reaction tubes 106. A sealing ring 224 is disposed between the plate 222 and the plate 122/heat transfer chamber 102 to seal the reaction products in the floating head 108 from the cooling transition unit 110 and the heat transfer chamber 102.

A roller support 226 moveably connects the floating head 108 to the heat transfer chamber 102. For example, the floating head 108 may float at a rear of the heat transfer chamber 102 such that a location of the floating head with respect to the heat transfer chamber may fluctuate in one direction (*e.g*., due to thermal expansion).

FIG. 3 is an enlarged sectional view of a reaction tube 306 (*e.g*., such as the reaction tube 106 shown in FIG. 1). The reaction tube 306 extends from a bonnet 312 into a heat transfer chamber 302, passing through an inlet feed gas manifold 316, a reactor tubesheet face 318, and a plate (not shown) (all of which may be substantially similar to the correspondingly named components in FIG. 1). It is understood that, although not depicted, a plurality of reaction tubes are contemplated.

The reaction tube 306 includes a gas injection port 306a which extends axially from a reaction tube liner 306b. In one embodiment, the gas injection port 306a fits sufficiently loosely in the reaction tube liner 306b so as to allow gas to pass between the respective exterior and interior surfaces of their respective walls. Reactants in a first plenum 319 defined between the bonnet 312 and the inlet feed gas manifold 316 enter the gas injection port 306a. A sealing connector 334 is disposed in the inlet feed gas manifold 316 engaging the gas injection port 306a. The connector 334 can comprise multiple sealing arrangements such as a sealing gland or compression fitting. Accordingly, the first plenum 319 is sealed relative to a second plenum 321 defined between a coplanar second side of the inlet elliptical head, the bonnet 312, and the reactor tubesheet face 318. Optionally, a shroud gas is introduced into the second plenum 321.

A sealing gland (or stuffing box) 336 is disposed in the reactor tubesheet face 318, engaging the reaction tube liner 306b. The sealing gland 336 enables a gas-tight seal between the heat transfer chamber 302 and the second plenum 321. Commercially available sealing glands may be procured, *inter alia*, from Conax Technologies, Buffalo, New York, USA. A compressible sealant 336a (such as, for example, flexible graphite) engages the exterior of the reaction tube liner 306b. The second plenum 321 is sealed relative to the heat transfer chamber 302. A passage 336b extends through the sealing gland 336 to the reaction tube liner 306b. Gasses in the second plenum, for example, a shroud gas, may enter the reaction tube liner 306b via the passage 336b of the sealing gland 336.

Turning to FIG. 4, a heating source 400 is placed externally to a heat transfer chamber 402 (*e.g*., such as the heat transfer chamber 102 shown in FIG. 1). The heating source 400 includes an array of resistance coil heating elements 404. Supports 406 mechanically secure the resistance coil heating elements 404. For example, the supports 406 may be secured to the heat transfer chamber 402 and receive the resistance coil heating elements 404. Multiple heating sources (not depicted) may be used to create separate controllable heating zones (such as, for example, heating zones 102a-c described with respect to FIG. 1). Commercially available resistance coil heating elements may be procured, *inter alia,* from Keith Company, Pico Rivera, California, USA or Armstrong Chemtec Group, Coatesville, Pennsylvania, USA.

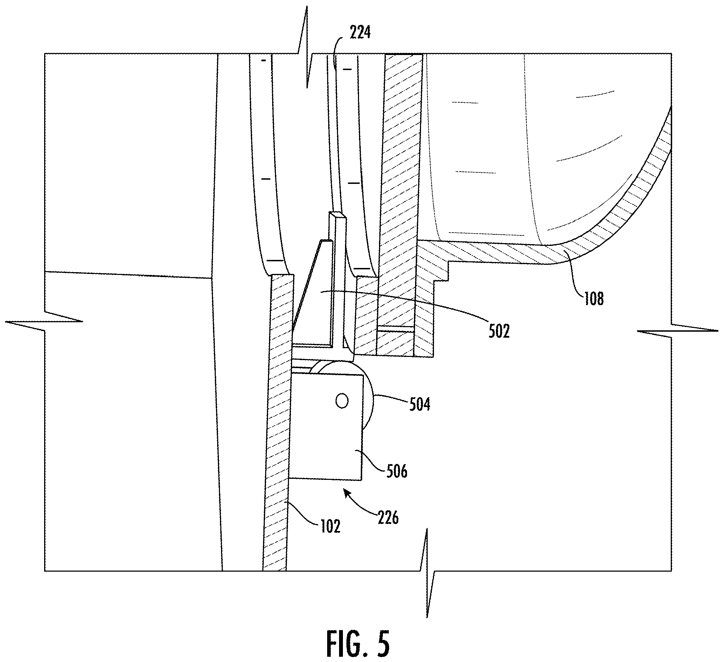

Turning to FIG. 5, an enlarged plan view of the roller support 226 is illustrated. For simplicity of illustration, a portion of plate 122e has been removed. The roller support 226 includes a support member 502 attached only to the floating head 108. A roller member 504 of the roller support 226 moveably engages the support member 502, allowing the floating head 108 to move along an axis defined by the plurality of reaction tubes 106. A track member 506 of the roller support 226 is attached to the heat transfer chamber 102 and secures the roller member 504.

In operation, the thermal condensation reactor 100 may find use as a multi-zone, fluidized bed assisted heating/cooling arrangement for thermal condensation or dehydrochlorination reactions. For example, in one embodiment, the thermal condensation reaction may be thermal condensation of a reactant gas comprising a hydrido-functional halosilane and an alkenyl halide, and the thermal condensation forms an alkenyl-functional halosilane. For example, the hydrido-functional halosilane may have formula R_{w}HₓSiX_{(4-w-x)}, where subscript subscript w is 0 to 2, subscript x is 1 to 3, and a quantity (w + x) is 1 to 3; each R is an independently selected monovalent hydrocarbon group of 1 to 18 carbon atoms that is free of aliphatic unsaturation, and each X is an independently selected halogen atom such as F, Cl, Br, or I, alternatively Cl or Br, and alternatively Cl. The monovalent hydrocarbon group for R may be alkyl (*e.g*., methyl, ethyl, or hexyl; alternatively methyl) or aryl (*e.g*., phenyl, tolyl, or xylyl; alternatively phenyl). The alkenyl halide may have formula R'Xₐ, where subscript a is 1 up to the valence of R'; R' is an alkenyl functional group such as vinyl, vinylidene, allyl, or hexenyl; and X is as described above. Exemplary hydrido-functional halosilanes include monochlorosilane (H₃SiCl), dimethylchlorosilane [(CH₃)₂HSiCl], dichlorosilane (H₂SiCl₂), and trichlorosilane (HSiCl₃). Exemplary alkenyl halides include vinyl chloride, vinylidene chloride, allyl chloride, and hexenyl chloride. The alkenyl-functional halosilane that may be prepared in the thermal condensation reactor 100 may have formula R'ᵤR_{y}H_{z}SiX_{(4-y-z)}, where subscript u is 1, 2, or 3 (alternatively 1), subscript y is 0, 1, or, 2; subscript z is 0, 1, or 2, and a quantity (u + y + z) is 1 to 3. Alkenyl-functional halosilanes that may be prepared in the thermal condensation reactor 100 include vinyl trichlorosilane, (*e.g*., when the hydrido-functional halosilane is HSiCl₃ and the alkenyl halide is vinyl chloride), or dimethylvinylchlorosilane [(CH₃)₂(CH₂=CH)SiCl] (*e.g*., when the hydrido-functional halosilane is dimethylchlorosilane and the alkenyl halide is vinyl chloride). The gas phase reaction of trichlorosilane with vinyl chloride does not progress quickly until the temperatures exceed 500°C.

The thermal condensation reactor 100 delivers the greater than 500°C temperatures needed to operate the reaction at good conversion per pass while at the same time suppressing the consequence of exotherm associated with the process chemistry. To achieve this, a plurality of reaction tubes 106 (*e.g*., fit with an interior liners having chemical resistance to HCl and good thermal conductivity (such as, for example, isomolded graphite, carbon fiber/carbon composite, isomolded graphite with SiC-coating, or silicon carbide such as Saint-Gobain Hexaloy^{®} SiC)) are used. Because the coefficient of thermal expansion of the liner is less than the reactor tube metallurgy, the liner will need to slide during growth. The sliding may be assisted through use of a flexible graphite film and/or saddle placed on the bottom of the liner. Also, the length of the interior liner should be preferably longer than the length of the tubes. The plurality of reaction tubes 106 are arranged parallel to the flow of the reactants and cross-flow (*e.g*., perpendicular or nearly perpendicular (*e.g*., plus or minus 15 degrees from perpendicular)) to the flow of fluidization gas. As illustrated, this creates a horizontal flow of the reactants and a vertical flow of fluidization gas. The horizontal configuration offers advantages in mechanically supporting the plurality of reaction tubes 106 and maintenance operations. Use of silicon carbide may offer sufficient oxidation resistance to allow an oxidative treatment of deposited soot that accumulates in the process over time. As part of a maintenance cycle, hydrogen addition at temperatures in excess of 600°C may, *e.g*., may also, be employed to methanize soot-like compounds to a vapor form.

The liner is secured with a sealing gland 336 (as shown in FIG. 3), for example, to prevent flow of reactants (*e.g*., reaction gases) outside of the liner (*e.g*., into the heat transfer chamber 102).

Optionally, a shroud gas is co-fed to the reactor. For the reaction of trichlorosilane with vinyl chloride, use of silicon tetrachloride (SiCl₄) as the shroud gas provides benefit as a diluent that can reduce migration of carbon species near the reaction tube wall while reducing Si-H/Si-Cl rearrangement reactions leading to dichlorosilane and vinyldichlorosilane in the effluent. The shroud gas is comprised of an organohalosilane, most preferably the halogenation product of the hydrido-functional halosilane feed agent and hydrogen halide (HX). For example, for reactions involving trichlorosilane with vinyl chloride, silicon tetrachloride would be used as the shroud gas since the halogenation product of trichlorosilane (HSiCl₃) and HCl is silicon tetrachloride (SiCl₄). Similarly, for reactions involving dimethylchlorosilane with vinyl chloride, dimethyldichlorosilane [(CH₃)₂SiCl₂] would be used. The shroud gas is introduced into the second plenum defined between the inlet feed gas manifold 116, bonnet 112, and the reactor tubesheet face 118 via the shroud gas port 120. Shroud gas flows around the gas injection port 306a for each reaction tube through the passage 336b, which extends through the sealing gland 336 to the reaction tube liner 306b. The passage 336b is configured with a sufficient pressure drop to encourage balanced distribution of shroud gas between all of the plurality of reaction tubes 106. Similarly, for each gas injection port 306a containing the vinyl chloride/trichlorosilane feed mixture, there will exist an orifice plate at entry to encourage uniform distribution of gas between individual reaction tubes 106.

The plurality of reaction tubes 106 extend from the bonnet 112, pass through heat transfer chamber 102, and terminate at the floating head 108. The heat transfer chamber 102 is a heated trough with a plurality of heating zones 102a-c. Inside the heat transfer chamber 102, a fluidization gas (such, as for example, nitrogen) is used to fluidize a solid medium, forming a fluidized bed. As illustrated, the fluidization gas travels perpendicular to the plurality of reaction tubes 106. The fluidization gas (such, as for example, nitrogen) is delivered to the heat transfer chamber 102 via a plurality of gas ports 126a-d, and may pass through a sparger, sintered metal perforated plate, or a gas distributor. The heat transfer chamber 102 has a top (not depicted) sealed with multiple collection plenums that may combine to a common exhaust. The non-reactive fluidization gas can be cooled (*e.g*., upon exit from the heat transfer chamber 102) as needed to meet requirements for a blower operation (such as, for example, to recirculate the nitrogen) and if desired, energy conservation methods such as gas-to-gas interchange with the supplying gas injection nozzle 126a can be used to reduce heat input within heating zone 102a. Prior to the blower, entrained solids may be passed through a cyclone and returned to the heat transfer chamber 102. In the preferred embodiments, the fluidization behavior in the heat transfer chamber may (*e.g*., should) reside in the bubbling regime (*e.g*., to reduce the amount of entrained solids leaving the system).

Regarding the solid medium, a Geldart Group A powder form is used, preferably a brown aluminum oxide having a Sauter (or surface-to-volume) mean particle size of 100 µm. This material has good strength and adequate abrasion resistance for the superficial gas velocity range of interest, *e.g*., approximately 1.2-1.5 times minimum fluidization velocity. Each heating zone 102a-c may have some baffles (*e.g*., to reduce cross-mixing of solids). Bed level is maintained within each heating zone so as to fully submerge the bundle of reaction tubes 106 when fluidized.

A temperature of the solids in each zone (heating zones 102a-c) may be controlled by varying the power input through the electrical heaters (see FIG. 4), located on the walls of the heat transfer chamber 102, and/or by varying the flow rate of the fluidization gas. Volumetric flow of nitrogen is varied within each zone to maintain a bubbling fluidized bed, *e.g*., more gas is needed at lower temperatures since the minimum fluidization velocity decreases with increasing temperature for Geldart Group A solids. Varying the temperature of the fluidized solids across the length of the reactor, particularly in the zone where the heat generation starts to outpace the interior heat transfer coefficient at the process gas-liner boundary, allows for an enhanced tube size. In contrast, due to the solids being well mixed, a vertical arrangement of reaction tubes with a single fluidized bed would not have multiple heating zones and would not be able to support variations in the heat removal rate (*e.g*., to put less heat into the exothermic portion and/or cool a particular zone), which lowers yield of vinyl trichlorosilane among converted silanes if the temperature gets too high.

To accommodate thermal expansion, numerous methods can be employed. Differential expansion of the reactor can be on the order of 2 inches at the highest temperatures for a large commercial scale reactor process. Roller supports (such as, for example, the roller support 210 and the roller support 226) may be employed to accommodate thermal expansion. Additional devices could may include steel/graphite slide plates or ceramic (SiC) slide bearings. Optionally, an expansion bellows (not shown) can be incorporated into the vapor outlet 132.

The cooling transition unit 110 may also be a fluidized bed, in a manner similar to that previously described with respect to the heat transfer chamber 102. The floating head 108 is disposed in this separate fluidization zone (*e.g*., cooling transition unit 110).

The following examples are for illustrative purposes only and are not intended to limit the scope of the appended claims.

### EXAMPLES

### Example 1

To attempt a thermal condensation of trichlorosilane with vinyl chloride, a flow-through reaction tube (316/316L stainless steel) containing an interior liner made of SiC-coated isomolded graphite and an interior multi-element Type K thermocouple assembly with a protective Hexaloy^{®} SiC sheath was assembled. Sealing gland assemblies were used to ensure a seal around the interior liner and a thermocouple sheath, isolating the reactants from the stainless steel reaction tube and a thermocouple assembly. The thermocouple assembly was placed coaxial to the reaction tube, and the reaction tube was submerged inside an electrically-heated, fluidized sand bath system.

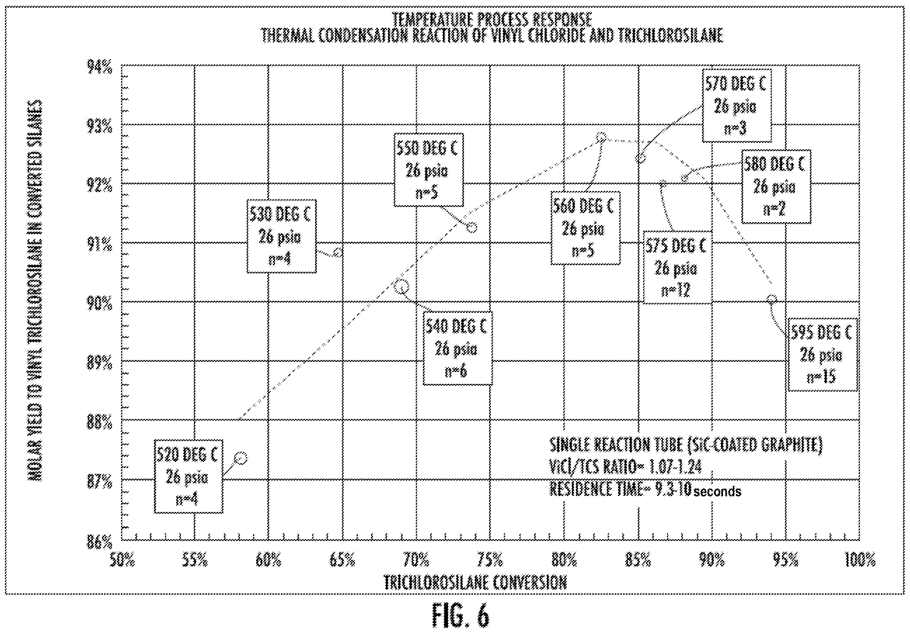

Nitrogen was used as the fluidization gas for the sand bath, and fluctuations of feed pressure of nitrogen was monitored to ensure fluidization was uniform. The temperature of the sand bath was specified and controlled to the temperatures listed in FIG. 6 (*e.g*., over a range of 520 °C - 595 °C). The pressure of the reactor was controlled using a pressure control valve with feedback control located downstream of the reactor effluent. After the effluent gas was cooled and condensable chlorosilane liquids were removed from the vapor, the product was collected. Temperature profiles interior to the tube (over three locations) were monitored using a data acquisition system and the system temperature and pressure were normalized prior to starting a campaign.

Vinyl chloride and trichlorosilane vapors with a fixed flow of argon were injected into the reaction tube under conditions of fixed reactor pressure and fixed sand bath temperature. Both the inlet and effluent of the reactor was monitored real time using a gas chromatograph (equipped with thermal conductivity detector) and a mass spectrometer. Collected liquids were also analyzed during campaigns of fixed composition. Chemicals detected in the reactor effluent included argon, hydrogen chloride, vinyl chloride, trichlorosilane, vinyl trichlorosilane, silicon tetrachloride, ethyl trichlorosilane, methyl trichlorosilane, vinyldichlorosilane, benzene,1,1,3-trichloro-1-silylcyclo-3-pentene, phenyl trichlorosilane, and 1,2-bis(trichlorosilyl)ethane (abundance of each species varied with temperature).

FIG. 6 is a yield plot for experiments involving the thermal condensation of trichlorosilane with vinyl chloride, showing molar yield based on vapor sampling technique as function of trichlorosilane conversion. During these experiments, the pressure was held fixed at 26 psia (176.9 kPa). FIG. 6 shows a peak yield.

### Example 2

Using the apparatus described in Example 1, vinyl chloride and dimethylchlorosilane vapors with a fixed flow of argon were injected into the reaction tube under conditions of fixed reactor pressure and fixed sand bath temperature. Both the inlet and effluent of the reactor was monitored real time using a gas chromatograph (equipped with thermal conductivity detector) and a mass spectrometer. Collected liquids were also analyzed during campaigns of fixed composition. Chemicals detected in the reactor effluent include argon, hydrogen chloride, vinyl chloride, dimethylchlorosilane, dimethylvinylchlorosilane, dimethyldichlorosilane, ethyldimethylchlorosilane, methylvinyldichlorosilane, allyldimethylchlorosilane, phenyldimethylchlorosilane, and 1,2-bis(dimethylchlorosilyl)ethane (abundance of each species varied with temperature).

During the experimentation, residence time was held constant (14 seconds) and the reactor pressure was held fixed at 26 psia (176.9 kPa). This reaction is slower than the reaction of trichlorosilane with vinyl chloride. TABLE 1 below shows that the yield of dimethylvinylchlorosilane goes through a maximum near 580 °C with a significant decay in yield of the desired product at 595 °C.

**TABLE 1**

| Operational Temperature of Sand Bath System (°C) | Conversion of Dimethylchlorosilane to Silane Products (%) | Normalized Molar Yield of Dimethylvinylchlorosilane Compared to Molar Yield of Dimethylvinylchlorosilane at Reference Temperature of 560 °C |
|---|---|---|
| 560 | 31.9 | 1 |
| 580 | 50 | 1.09 |
| 590 | 60.1 | 1.07 |
| 595 | 66.2 | 0.97 |

## Claims

1. A thermal condensation reactor, comprising:
a heat transfer chamber, wherein the heat transfer chamber is a fluidized bed having a fluidization gas flow in a first direction, and wherein the heat transfer chamber comprises a plurality of heating zones that are maintained at different temperatures; and
a plurality of reaction tubes disposed in the heat transfer chamber in a second direction that is perpendicular to the fluidization gas flow, each of the plurality of reaction tubes having a reactant gas flow that passes through the plurality of heating zones.

2. The thermal condensation reactor of claim 1, wherein the fluidization gas flow is vertical and the reactant gas flow is horizontal.

3. The thermal condensation reactor of claim 1, further comprising a port for introducing a shroud gas, wherein the shroud gas flows through a portion of each of the plurality of reaction tubes.

4. The thermal condensation reactor of claim 3, wherein the reactant gas is a mixture of vinyl chloride and trichlorosilane, and wherein the shroud gas is silicon tetrachloride.

5. The thermal condensation reactor of claim 1, wherein each of the plurality of reaction tubes is associated with a sealing gland integrated with an interior liner comprising either graphite, carbon fiber carbon composite, silicon carbide-coated isomolded graphite, or silicon carbide.

6. The thermal condensation reactor of claim 1, further comprising a bonnet for covering the gas flow inlets of the plurality of reaction tubes.

7. The thermal condensation reactor of claim 1, further comprising a floating head for covering the gas flow outlets of the plurality of reaction tubes, wherein the floating head is moveable in the second direction.

8. The thermal condensation reactor of claim 7, further comprising a cooling transition unit that encompasses the floating head, and wherein the cooling transition unit is also a fluidized bed.

9. The thermal condensation reactor of claim 1, further comprising one or more roller supports associated with the heat transfer chamber to accommodate thermal expansion.

10. The thermal condensation reactor of claim 1, further comprising one or more baffles disposed in the heat transfer chamber.

11. A process for producing an alkenyl-functional halosilane comprising:
premixing an alkenyl halide and a hydrido-functional halosilane to create a reactant gas;
introducing the reactant gas into a plurality of reaction tubes arranged horizontally in a fluidized bed; and
passing the reactant gas through a plurality of heating zones in the fluidized bed, wherein the plurality of heating zones are maintained at different temperatures.

12. The process of claim 11, further comprising diluting the reactant gas with a shroud gas comprising of the halogenation product of the hydrido-functional halosilane and hydrogen halide.

13. The process of claim 11 or claim 12, where the alkenyl halide is vinyl chloride.

14. The process of any one of claims 11 to 13, where the hydrido-functional halosilane has formula R_{w}HₓSiX_{(4-w-x)}, where subscript subscript w is 0 to 2, subscript x is 1 to 3, and a quantity (w + x) is 1 to 3; each R is an independently selected monovalent hydrocarbon group of 1 to 18 carbon atoms that is free of aliphatic unsaturation, and each X is an independently selected halogen atom.

15. The process of claim 14, where the hydrido-functional halosilane is trichlorosilane.

## Patentansprüche

1. Thermischer Kondensationsreaktor, umfassend:
eine Wärmeübertragungskammer, wobei die Wärmeübertragungskammer ein Fluidbett ist, das einen Fluidisierungsgasstrom in einer ersten Richtung aufweist, und wobei die Wärmeübertragungskammer eine Vielzahl von Erwärmungszonen umfasst, die auf unterschiedlichen Temperaturen aufrechterhalten werden; und
eine Vielzahl von Reaktionsrohren, die in der Wärmeübertragungskammer in einer zweiten Richtung angeordnet sind, die senkrecht zu dem Fluidisierungsgasstrom ist, wobei jedes der Vielzahl von Reaktionsrohren einen Reaktantengasstrom aufweist, der durch die Vielzahl von Erwärmungszonen hindurch passiert.

2. Thermischer Kondensationsreaktor nach Anspruch 1, wobei der Fluidisierungsgasstrom vertikal ist und der Reaktantengasstrom horizontal ist.

3. Thermischer Kondensationsreaktor nach Anspruch 1, ferner umfassend einen Anschluss zum Einführen eines Hüllgases, wobei das Hüllgas durch einen Abschnitt jeder der Vielzahl von Reaktionsrohren hindurchströmt.

4. Thermischer Kondensationsreaktor nach Anspruch 3, wobei das Reaktantengas eine Mischung aus Vinylchlorid und Trichlorsilan ist und wobei das Hüllgas Siliciumtetrachlorid ist.

5. Thermischer Kondensationsreaktor nach Anspruch 1, wobei jedes der Vielzahl von Reaktionsrohren einer Dichtungsstopfbüchse zugeordnet ist, die in eine Innenauskleidung integriert ist, umfassend entweder Graphit, Kohlefaserkohlenstoffverbundstoff, Siliciumcarbid-beschichteten isogeformten Graphit oder Siliciumcarbid.

6. Thermischer Kondensationsreaktor nach Anspruch 1, ferner umfassend eine Haube zum Abdecken der Gasstromeinlässe der Vielzahl von Reaktionsrohren.

7. Thermischer Kondensationsreaktor nach Anspruch 1, ferner umfassend einen Schwimmkopf zum Abdecken der Gasstromauslässe der Vielzahl von Reaktionsrohren, wobei der Schwimmkopf in der zweiten Richtung bewegbar ist.

8. Wärmekondensationsreaktor nach Anspruch 7, ferner umfassend eine Kühlübergangseinheit, die den Schwimmkopf umschließt, und wobei die Kühlübergangseinheit auch ein Fluidbett ist.

9. Thermischer Kondensationsreaktor nach Anspruch 1, ferner umfassend einen oder mehrere Rollenhalter, die der Wärmeübertragungskammer zugeordnet sind, um die Wärmeausdehnung aufzunehmen.

10. Thermischer Kondensationsreaktor nach Anspruch 1, ferner umfassend eine oder mehrere Umlenkbleche, die in der Wärmeübertragungskammer angeordnet sind.

11. Verfahren zum Produzieren eines alkenylfunktionellen Halogensilans, umfassend:
Vormischen eines Alkenylhalogenids und eines hydridofunktionellen Halogensilans, um ein Reaktantengas zu erzeugen;
Einführen des Reaktandengases in eine Vielzahl von Reaktionsrohren, die in einem Fluidbett horizontal angebracht sind; und
Passieren des Reaktantengases durch eine Vielzahl Erwärmungszonen hindurch in dem Fluidbett, wobei die Vielzahl von Erwärmungszonen bei unterschiedlichen Temperaturen aufrechterhalten werden.

12. Verfahren nach Anspruch 11, ferner umfassend ein Verdünnen des Reaktantengases mit einem Hüllgas, umfassend Halogenierungsprodukt des hydridofunktionellen Halogensilans und Wasserstoffhalogenids.

13. Verfahren nach Anspruch 11 oder 12, wobei das Alkenylhalogenid Vinylchlorid ist.

14. Verfahren nach einem der Ansprüche 11 bis 13, wobei das hydridofunktionelle Halogensilan die Formel R_{w}HₓSiX (_{4-w-x}) aufweist, wobei ein tiefgestelltes tiefgestelltes w 0 bis 2 beträgt, ein tiefgestelltes x 1 bis 3 beträgt und eine Menge (w + x) 1 bis 3 beträgt; jedes R eine unabhängig ausgewählte einwertige Kohlenwasserstoffgruppe von 1 bis 18 Kohlenstoffatomen ist, die frei von aliphatischer Ungesättigtheit ist, und jedes X ein unabhängig ausgewähltes Halogenatom ist.

15. Verfahren nach Anspruch 14, wobei das hydridofunktionelle Halogensilan Trichlorsilan ist.

## Revendications

1. Réacteur de condensation thermique, comprenant :
une chambre de transfert de chaleur, la chambre de transfert de chaleur étant un lit fluidisé ayant un écoulement de gaz de fluidisation dans une première direction, et la chambre de transfert de chaleur comprenant une pluralité de zones de chauffage qui sont maintenues à des températures différentes ; et
une pluralité de tubes à réaction disposés dans la chambre de transfert de chaleur dans une seconde direction qui est perpendiculaire à l'écoulement de gaz de fluidisation, chacun parmi la pluralité de tubes à réaction ayant un écoulement de gaz réactif qui passe à travers la pluralité de zones de chauffage.

2. Réacteur de condensation thermique selon la revendication 1, dans lequel l'écoulement de gaz de fluidisation est vertical et l'écoulement de gaz réactif est horizontal.

3. Réacteur de condensation thermique selon la revendication 1, comprenant en outre un orifice pour introduire un gaz d'enveloppement, le gaz d'enveloppement s'écoulant à travers une partie de chacun parmi la pluralité de tubes à réaction.

4. Réacteur de condensation thermique selon la revendication 3, dans lequel le gaz réactif est un mélange de chlorure de vinyle et de trichlorosilane, et dans lequel le gaz d'enveloppement est du tétrachlorure de silicium.

5. Réacteur de condensation thermique selon la revendication 1, dans lequel chacun parmi la pluralité de tubes à réaction est associé à un presseétoupe d'étanchéité intégré à une doublure intérieure comprenant soit du graphite, soit un composite de carbone de fibre de carbone, soit du graphite isomoulé revêtu de carbure de silicium soit du carbure de silicium.

6. Réacteur de condensation thermique selon la revendication 1, comprenant en outre une coiffe pour couvrir les entrées d'écoulement de gaz de la pluralité de tubes à réaction.

7. Réacteur de condensation thermique selon la revendication 1, comprenant en outre une tête flottante pour couvrir les sorties d'écoulement de gaz de la pluralité de tubes à réaction, la tête flottante étant mobile dans la seconde direction.

8. Réacteur de condensation thermique selon la revendication 7, comprenant en outre une unité de transition de refroidissement qui englobe la tête flottante, et dans lequel l'unité de transition de refroidissement est également un lit fluidisé.

9. Réacteur de condensation thermique selon la revendication 1, comprenant en outre un ou plusieurs supports de rouleau associés à la chambre de transfert de chaleur pour s'adapter à la dilatation thermique.

10. Réacteur de condensation thermique selon la revendication 1, comprenant en outre un ou plusieurs déflecteurs disposés dans la chambre de transfert de chaleur.

11. Procédé permettant de produire un halosilane à fonctionnalité alcényle comprenant :
le prémélange d'un halogénure d'alcényle et d'un halosilane à fonctionnalité hydrido pour créer un gaz réactif ;
l'introduction du gaz réactif dans une pluralité de tubes à réaction agencés horizontalement dans un lit fluidisé ; et
le passage du gaz réactif à travers une pluralité de zones de chauffage dans le lit fluidisé, dans lequel la pluralité de zones de chauffage sont maintenues à des températures différentes.

12. Procédé selon la revendication 11, comprenant en outre la dilution du gaz réactif avec un gaz d'enveloppement constitué du produit d'halogénation de l'halosilane à fonctionnalité hydrido et d'un halogénure d'hydrogène.

13. Procédé selon la revendication 11 ou la revendication 12, où l'halogénure d'alcényle est du chlorure de vinyle.

14. Procédé selon l'une quelconque des revendications 11 à 13, où l'halosilane à fonctionnalité hydrido a la formule R_{w}HₓSiX_{(4-w-x)}, où l'indice indice w va de 0 à 2, l'indice x va de 1 à 3, et une quantité (w + x) va de 1 à 3 ; chaque R est un groupe hydrocarboné monovalent indépendamment choisi de 1 à 18 atomes de carbone qui est exempt d'insaturation aliphatique, et chaque X est un atome d'halogène indépendamment choisi.

15. Procédé selon la revendication 14, où l'halosilane à fonctionnalité hydrido est trichlorosilane.
